# EUROPÄISCHE PATENTSCHRIFT

(11) **EP 3 222 135 B1**
(45) Veröffentlichungstag und Bekanntmachung des Hinweises auf die Patenterteilung: **26.06.2019**
(21) Anmeldenummer: 17000444.4
(22) Anmeldetag: 17.03.2017
(51) Int. Cl.: A01G 3/053

(54) **HECKENSCHERE MIT EINER VORRICHTUNG ZUR INBETRIEBNAHME MIT VERRINGERTEN HALTEKRÄFTEN**
HEDGE TRIMMER WITH IMPROVED TRIGGER FOR PREVENTING FATIGUE
TAILLE HAIE AVEC GACHETTE A FORCE DE MAINTIEN REDUITE

(30) Priorität: 21.03.2016 DE 102016003426
(43) Veröffentlichungstag der Anmeldung: 27.09.2017
(73) Patentinhaber: Andreas Stihl AG & Co. KG, 71336 Waiblingen (DE)
(72) Erfinder: Kolb, Joachim, 71638 Ludwigsburg (DE); Krätzig, David, 71642 Ludwigsburg (DE)
(74) Vertreter: Wasmuth, Rolf

(56) Entgegenhaltungen:
- EP-A1- 0 664 949
- DE-B3-102004 009 486

## Beschreibung

Die Erfindung betrifft ein handgeführtes Arbeitsgerät mit einer Vorrichtung zur Inbetriebnahme eines elektrischen Antriebsmotors über zumindest ein Betätigungselement. Ein solches Arbeitsgerät ist z.B. aus EP 0 664 949 A1 bekannt. Das Betätigungselement kann ein sogenannter Gashebel sein, der in einem Handgriff des Arbeitsgeräts angeordnet und gegen eine Betätigungskraft in eine Betriebsstellung zu verlagern ist. Mit dem Betätigungselement ist ein Übertragungselement gekoppelt, das abhängig von der Betätigung aus einer Ruhelage in einen Betriebsbereich verstellbar ist. Dabei wird über das Übertragungselement ein elektrisches Schaltelement betätigt, über das der elektrische Antriebsmotor des Arbeitsgerätes in Betrieb genommen wird. Auf seinem Verstellweg aus der unbetätigten Ruhelage in eine Endlage ist das Übertragungselement mit einer Verstellkraft zu verstellen, wobei die zum Bewegen des Übertragungselementes aufzubringende Verstellkraft zumindest einen Anteil der am Betätigungselement aufzubringenden Betätigungskraft bildet.

Aus der EP 0 664 949 A1 ist ein Arbeitsgerät in Form einer Heckenschere bekannt die über eine sogenannte Zweihandsicherung gegenüber unbeabsichtigte Inbetriebnahme gesichert ist. Um das elektrische Arbeitsgerät in Betrieb zu nehmen, ist vorteilhaft ein im hinteren Handgriff angeordnetes erstes Betätigungselement als Gashebel und - gleichzeitig oder nacheinander - ein an einem vorderen Handgriff angeordnetes zweites Betätigungselement niederzudrücken.

Nachteilig bei diesen Anordnungen ist, dass die in der Gesamtanordnung vorgesehenen Rückstellfedern auch bei eingeschaltetem Arbeitsgerät auf die Betätigungselemente wirken, so dass der Benutzer während des Betriebs des Arbeitsgerätes diese Federrückstellkräfte permanent gegenhalten muss.

Werden die Rückstellfedern schwächer ausgelegt, ergibt sich für den Benutzer zwar ein angenehmeres Arbeiten mit vertretbaren Gegenkräften an den Betätigungselementen, jedoch ist das Einschalten des Arbeitsgerätes dann sehr leicht und mit geringem Kraftaufwand möglich, was nachteilig ist.

Der Erfindung liegt die Aufgabe zugrunde, ein handgeführtes Arbeitsgerät mit einem Schaltelement zur Inbetriebnahme eines elektrischen Antriebsmotors derart auszubilden, dass einerseits für das Einschalten über ein Betätigungselement hohe Betätigungskräfte notwendig sind und andererseits nach dem Einschalten die Betätigungskräfte auch über einen längeren Arbeitszeitraum vom Benutzer mit vertretbarem Kraftaufwand gegengehalten werden können.

Diese Aufgabe wird erfindungsgemäß mit den Merkmalen des Anspruchs 1 gelöst.

Nach der Erfindung wird der Verstellweg des Übertragungselementes derart ausgelegt, dass er einen an die Ruhelage anschließenden ersten Wegabschnitt und einen an den ersten Wegabschnitt anschließenden zweiten Wegabschnitt aufweist. Der zweite Wegabschnitt umfasst den Betriebsbereich des Arbeitsgerätes. Die auf das Übertragungselement aufzubringende Verstellkraft steigt auf dem ersten Wegabschnitt des Verstellweges steil an, um nach Erreichen eines Maximums auf dem zweiten Wegabschnitt des Verstellweges wieder abzunehmen.

Durch die Ausbildung der Vorrichtung zur Inbetriebnahme des elektrischen Antriebsmotors wird gewährleistet, dass nach dem Einschalten des Antriebsmotors die vom Benutzer gegenzuhaltenden Betätigungskräfte kleiner sind als im Moment des Einschaltens des elektrischen Antriebsmotors. Auf dem Verstellweg von der Ruhelage in die Endlage des Übertragungselementes steigt die Betätigungskraft zunächst steil an, um dann, nach Überschreiten eines Maximums, wieder abzufallen.

Die am Betätigungselement aufzubringende Betätigungskraft zum Niederdrücken des Betätigungselementes setzt sich zusammen aus einer Federkraft einer Rückstellfeder des Betätigungselementes und der am Übertragungselement aufzubringenden Verstellkraft.

In Ausgestaltung der Erfindung ist vorgesehen, dass die Summe aus der Verstellkraft und der Federkraft über einen Teilabschnitt des Verstellweges des Übertragungselementes gleich bleibt oder abfallend ist.

Wird das elektrische Schaltelement in einem Bereich des Maximums der Verstellkraft betätigt und schaltet den elektrischen Antriebsmotor ein, muss der Benutzer eine hohe Einschaltkraft zur Inbetriebnahme des Arbeitsgerätes aufbringen. Dies ist eine zuverlässige Maßnahme gegen unbeabsichtigtes Einschalten des elektrischen Antriebsmotors.

Das Übertragungselement ist in Weiterbildung der Erfindung als ein um eine Hebelachse drehbarer Zwischenhebel ausgebildet, der vorzugsweise als zweiarmiger Hebel gestaltet ist. An einem ersten Hebelarm des Zwischenhebels greift ein mit dem Betätigungselement verstellbares Koppelelement an, wobei sich die wirksame Hebellänge zwischen dem Koppelelement und der Hebelachse des Zwischenhebels in Abhängigkeit des Drehwinkels des Zwischenhebels ändert. Die wirksame Hebellänge ändert sich in Abhängigkeit des Verstellweges.

In Weiterbildung der Erfindung wird das elektrische Schaltelement von einem um eine Nockenachse drehenden Schaltnocken geschaltet. Zweckmäßig ist der Schaltnocken über eine Zugstange mit dem Zwischenhebel verbunden, der an einem zweiten Hebelarm des Zwischenhebels angelenkt ist.

Um einen Endanschlag der Vorrichtung zur Inbetriebnahme des elektrischen Antriebsmotors zu vermeiden, ist vorgesehen, dass der Schaltnocken über die Schaltstellung des elektrischen Schaltelementes hinaus drehbar ist. Dies gewährleistet einen ergänzten Betätigungsbereich, in dem der Benutzer - jenseits der Schaltstellung - das Betätigungselement leicht bewegen kann, ohne dass das Schaltelement schaltet. Dadurch ist ein erhöhter Komfort beim Halten des Betätigungselementes in der Betriebsstellung gegeben.

Vorteilhaft ist das elektrische Schaltelement als Betriebsschalter mit einer Schaltzunge ausgebildet. Der Schaltnocken weist eine Anstiegsflanke auf, die in einer Ruhelage bei unbetätigtem Betätigungselement des Schaltnockens mit einem Abstand zu der Schaltzunge des Schaltelementes liegt. Das elektrische Schaltelement kann auch ein berührungsloses Schaltelement sein, beispielsweise ein Hall-Sensor oder ein Reed-Kontakt, der von einem mit dem Schaltnocken bewegten Permanentmagneten zu betätigen ist.

In Weiterbildung der Erfindung weist der Schaltnocken eine an die Anstiegsflanke anschließende Auslaufflanke auf, die vorzugsweise als Kreisbogenabschnitt um die Nockenachse gestaltet ist. Die Ausbildung als Kreisbogenabschnitt ermöglicht in einfacher Weise, dass der Schaltnocken über die Schaltstellung des elektrischen Schaltelementes hinaus drehbar ist.

Zweckmäßig weist der Schaltnocken eine weitere, zweite Nockenbahn für ein weiteres elektrisches Schaltelement auf, z. B. für einen Bremsschalter.

Die wirksame Länge der Schaltzunge des Schaltelementes ändert sich mit bei Drehung des Schaltnockens. Der einen Schalthebel bildende Abstand zwischen dem Schaltnocken und einer Betätigungsachse der Schaltzunge wird bei Drehung des Schaltnockens in die Einschaltstellung anwachsen. Dadurch werden die Schaltkräfte am Schaltelement nach dem Einschalten im Betriebsbereich des Übertragungselementes geringer.

In der Ruhelage des Übertragungselementes hat der erste Hebelarm zwischen dem Koppelelement und der Hebelachse des Übertragungselementes eine wirksame erste Länge. In der Ruhelage des Übertragungselementes hat ein zweiter Hebelarm zwischen der Hebelachse des Übertragungselementes und der Anlenkstelle des Übertragungselementes zu dem Schaltnocken eine wirksame zweite Länge. Eine vorteilhafte Auslegung der Vorrichtung zum elektrischen Einschalten eines Antriebsmotors ist erzielt, wenn die wirksame erste Länge des ersten Hebelarms kleiner ist als die wirksame zweite Länge des zweiten Hebelarms.

Weitere Merkmale der Erfindung ergeben sich aus den weiteren Ansprüchen, der Beschreibung und der Zeichnung, in der ein Ausführungsbeispiel der Erfindung näher beschrieben ist. Es zeigen:
- Fig. 1: eine Seitenansicht auf ein handgeführtes Arbeitsgerät am Beispiel einer akkubetriebenen Heckenschere,
- Fig. 2: in vergrößerter Darstellung das Gehäuse des Arbeitsgerätes nach Fig. 1 in einem Teilschnitt,
- Fig. 3: in vergrößerter Darstellung eine im Gehäuse angeordnete Vorrichtung zum Betätigen eines elektrischen Schaltelementes,
- Fig. 4: ein Diagramm einer normierten Betätigungskraft eines Betätigungselementes der Vorrichtung über einem normierten Verstellweg,
- Fig. 5: in vergrößerter Darstellung einen Ausschnitt aus der Seitenansicht nach Fig. 2 mit in Ruhelage liegender Vorrichtung zum Betätigen des Schaltelementes,
- Fig. 6: eine Darstellung der Vorrichtung nach Fig. 5 mit in Endlage liegender Vorrichtung für das Schaltelement,
- Fig. 7: in schematischer Darstellung ein Kraft/Weg Diagramm eines Betätigungselementes.

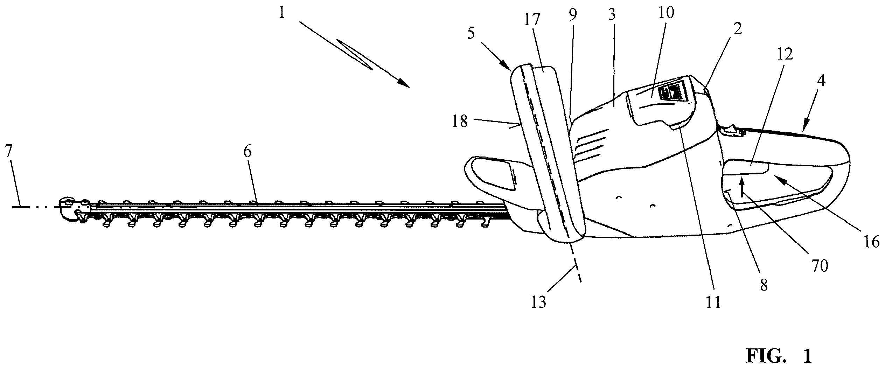

Das in Fig. 1 dargestellte handgeführte Arbeitsgerät 1 ist im Ausführungsbeispiel eine Heckenschere 2. Das Gehäuse 3 des Arbeitsgerätes 1 weist einen hinteren, ersten Handgriff 4 und einen vorderen, zweiten Handgriff 5 auf. Der erste Handgriff 4 ist in Richtung der Längsachse 7 des Arbeitsgerätes 1 ausgerichtet. Der erste Handgriff 4 ist an dem einen, hinteren Ende 8 des Gehäuses 3 angeordnet.

Im Bereich des vorderen Endes 9 des Gehäuses 3 ist der zweite Handgriff 5 vorgesehen, der im Ausführungsbeispiel als Bügelgriff ausgebildet ist. Der zweite Handgriff 5 liegt in einer Ebene 13 zwischen dem vorderen Ende 9 des Gehäuses 3 und einem Werkzeug 6 des Arbeitsgerätes 1, im Ausführungsbeispiel ein Messerbalken.

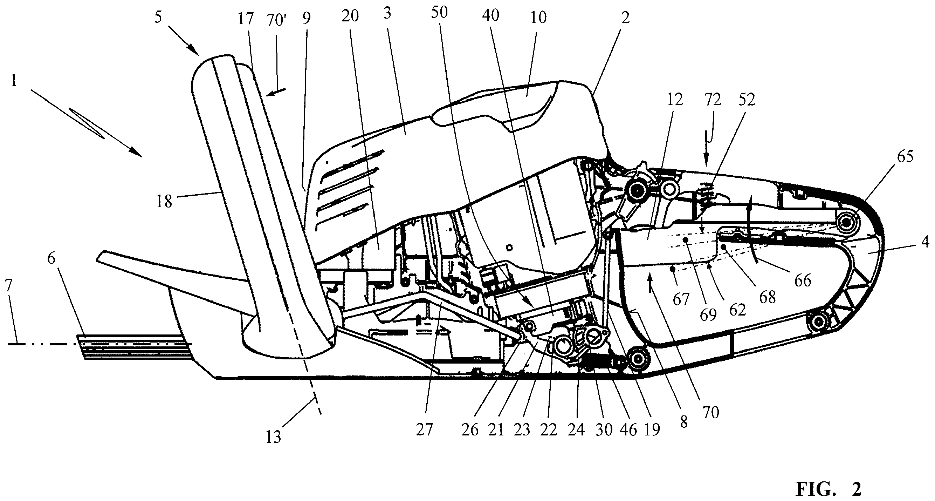

Das gezeigte handgeführte Arbeitsgerät ist ein elektrisches Arbeitsgerät, vorzugsweise ein akkubetriebenes elektrisches Arbeitsgerät. Der Akku 10 des Arbeitsgerätes ist in einen Gehäuseschacht 11 eingeschoben und dient der elektrischen Energieversorgung eines im Arbeitsgerät 1 vorgesehenen elektrischen Antriebsmotors 20 (Fig. 2).

Im gezeigten Ausführungsbeispiel muss ein Benutzer zur Inbetriebnahme des elektrischen Antriebsmotors 20 ein erstes Betätigungselement 12 bedienen, welches als Gashebel 16 im Handgriff 4 des Arbeitsgerätes 1 angeordnet ist.

Für einen sicheren Betrieb des elektrischen Arbeitsgerätes 1 kann es vorteilhaft sein, im zweiten, vorderen Handgriff 5 ein weiteres, zweites Betätigungselement 17 vorzusehen, welches relativ zum Griffgehäuse 18 des vorderen Handgriffs 5 verlagerbar ist.

Im gezeigten Ausführungsbeispiel muss ein Benutzer zur Inbetriebnahme des elektrischen Antriebsmotors 20 sowohl das erste Betätigungselement 12 am ersten Handgriff 4 bedienen als auch das zweite Betätigungselement 17 im zweiten Handgriff 5 niederdrücken. Dies entspricht dem Aufbau und der Funktion einer sogenannten Zweihandsicherung. Diese gewährleistet, dass der Benutzer bei der Inbetriebnahme des handgeführten Arbeitsgerätes 1 beide Hände am Arbeitsgerät 1 positioniert hat.

Es kann ausreichend sein, die Inbetriebnahme des Arbeitsgerätes 1 über nur ein einziges Betätigungselement vorzusehen; so kann das Arbeitsgerät 1 nur über das Betätigungselement 12 in Betrieb genommen werden.

Wie aus dem vergrößerten Teilschnitt gemäß Darstellung in Fig. 2 zu ersehen, wirkt das erste Betätigungselement 12 über eine Koppelstange 19 auf eine Schaltwippe 21. Die Schaltwippe 21 trägt ein Koppelelement 22, welches auf ein Übertragungselement 23 wirkt. Auf diese Weise ist das Übertragungselement 23 mit dem Betätigungselement 12 im Handgriff 4 stellungsabhängig gekoppelt. Das Übertragungselement 23 ist über eine Zugstange 24 mit einem Schaltnocken 30 verbunden, der um eine Nockenachse 36 drehbar ist. Über den Schaltnocken 30 wird ein elektrisches Schaltelement 40 betätigt, das einen Betriebsschalter des Arbeitsgerätes bildet. Über das elektrische Schaltelement 40 bzw. den Betriebsschalter wird der elektrische Antriebsmotor 20 in Betrieb genommen. Der Schaltnocken 30 wirkt auf eine Schaltzunge 41 des Schaltelementes 40.

Die Schaltwippe 21 kann über die Koppelstange 19 um eine gehäusefeste Drehachse verschwenkbar sein; im gezeigten Ausführungsbeispiel nach Fig. 2 ist die Schaltwippe 21 an dem einen Ende mit der Koppelstange 19 des ersten Betätigungselementes 12 verbunden. An dem anderen Ende 26 der Schaltwippe 21 greift eine Betätigungsstange 27 an, die mit dem zweiten Betätigungselement 17 im zweiten Handgriff 5 gekoppelt ist.

Das Koppelelement 22, das Übertragungselement 23 und der Schaltnocken 30 bilden eine Vorrichtung 50 zur Inbetriebnahme des elektrischen Antriebsmotors 20 über zumindest ein Betätigungselement 12 des Arbeitsgerätes; im Ausführungsbeispiel wird das Koppelelement 22 der Schaltwippe 21 erst durch Betätigen des ersten Betätigungselementes 12 und des zweiten Betätigungselementes 17 soweit verstellt, dass das Schaltelement 40 betätigt und der Antriebsmotor 20 eingeschaltet wird.

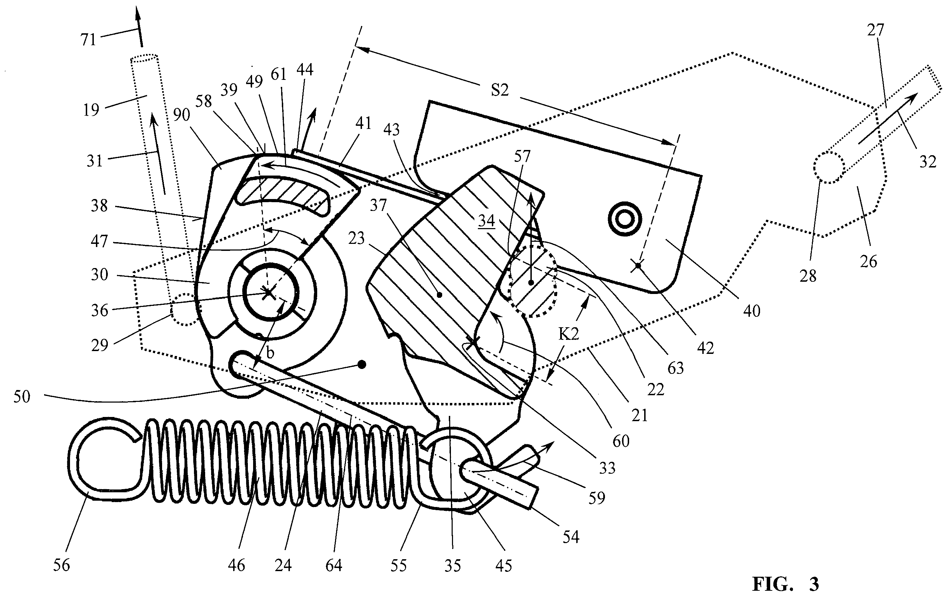

Die Vorrichtung 50 ist in ihrem Grundaufbau in Fig. 3 vergrößert dargestellt. Fig. 3 zeigt einen vertikalen Schnitt durch die Vorrichtung 50 nach Fig. 2. Die Sicht auf den Schnitt ist in der Zeichnungsebene der Fig. 3 um 180° gedreht, so dass die Koppelstange 19 des ersten Betätigungselementes 12 links liegt und die Betätigungsstange 27 des zweiten Betätigungselementes 17 in Fig. 3 rechts dargestellt ist.

Die Koppelstange 19 und die Betätigungsstange 27 sind vorteilhaft starr und jeweils über Gelenkstellen 28 und 29 an der punktiert angedeuteten Schaltwippe 21 angebunden. Die Schaltwippe 21 kann somit bei einem Zug in Pfeilrichtung 31 an der Koppelstange 19 um die Gelenkstelle 28 drehen; bei einem Zug in Pfeilrichtung 32 an der Betätigungsstange 27 kann die Schaltwippe 21 um die Gelenkstelle 29 drehen.

In Fig. 2 liegt die Schaltwippe 21 hinter dem Übertragungselement 23 und dem Schaltnocken 30; in Fig. 3 liegt die punktiert dargestellte Schaltwippe 21 in der vorderen Zeichenebene. Das Übertragungselement 23 und der Schaltnocken 30 liegen somit hinter der - punktiert angedeuteten - Schaltwippe 21.

Die Schaltwippe 21 trägt das Koppelelement 22. Das Koppelelement 22 liegt auf der dem Übertragungselement 23 zugewandt liegenden Seitenfläche der Schaltwippe 21.

Das Übertragungselement 23 dreht um eine Hebelachse 33. Dabei ist das Übertragungselement 23 im Wesentlichen als zweiarmiger Hebel gestaltet. Der Hebel bildet einen Zwischenhebel 37. An dem ersten Hebelarm 34 liegt das Koppelelement 22 der Schaltwippe 21 an; am Ende 45 des zweiten Hebelarms 35 greift die Zugstange 24 an, die den Drehweg des Übertragungselementes 23 mit dem Drehweg des Schaltnockens 30 koppelt.

Der Schaltnocken 30 dreht um die Nockenachse 36 und wirkt - zunächst über eine Anlagekante 58 - auf die Schaltzunge 41 des elektrischen Schaltelementes 40, im Ausführungsbeispiel der Betriebsschalter des elektrischen Antriebsmotors 20.

Die Schaltzunge 41 des Schaltelementes 40 dreht um eine Betätigungsachse 42. Über die Schaltzunge 41 wird ein Schaltstift 43 des Schaltelementes betätigt, der zwischen dem freien Ende 44 der Schaltzunge 41 und der Betätigungsachse 42 der Schaltzunge 41 liegt.

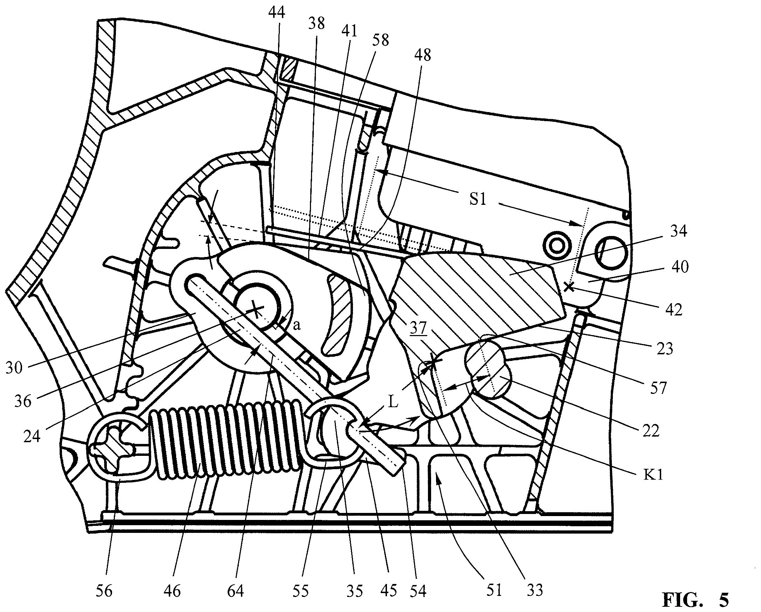

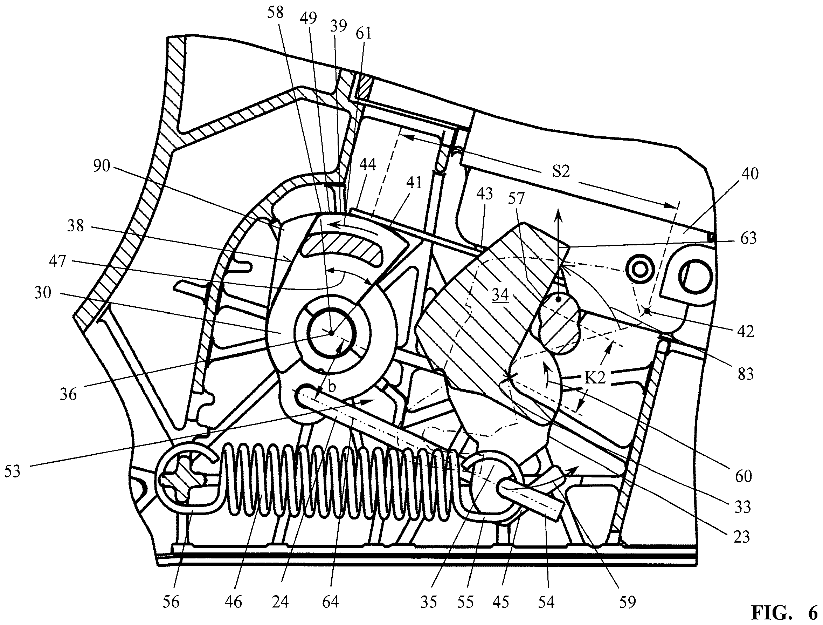

Der Schaltnocken 30 weist eine Anstiegsflanke 38 auf, die - vgl. Fig. 5 - bei unbetätigtem Betätigungselement 12 in der Ruhelage der Vorrichtung 50 einen Abstand 48, insbesondere einen geringen Abstand von wenigen Millimetern zu der Schaltzunge 41 aufweist. Diese Ruhelage 51 des Schaltnockens 30 gemäß Fig. 5 entspricht einer Ausgangsstellung des Schaltnockens 30 (Fig. 5). Der Schaltnocken 30 weist ferner eine Auslaufflanke 39 auf, die an die Anstiegsflanke 38 anschließt. Vorteilhaft ist die Auslaufflanke 39 als Kreisbogenabschnitt 49 um die Nockenachse 36 ausgebildet. Der Kreisbogenabschnitt 49 hat - wie die Figuren 3 und 6 zeigen - einen Bogenwinkel 47 von etwa 45°.

Auf die Vorrichtung 50 zur Inbetriebnahme des elektrischen Antriebsmotors 1 wirkt im Wesentlichen die Kraft einer Zugfeder 46, die am freien Ende 45 des zweiten Hebelarms 35 des Übertragungselementes 23 angreift. Ferner wirkt auf das Betätigungselement 12, welches im Ausführungsbeispiel im ersten Handgriff 4 angeordnet ist, eine Rückstellfeder 52, die das Betätigungselement 12 in Richtung auf seine Ruhelage mit einer Federkraft 72 kraftbeaufschlagt.

Ausgehend von der Ruhelage 51 in Fig. 5 wird bei einem Niederdrücken des Betätigungselementes 12 im hinteren Handgriff 4 und einem Eindrücken des zweiten Betätigungselementes 17 in das Griffgehäuse 18 des vorderen Handgriffs 5 die Schaltwippe 21 bewegt und das Koppelelement 22 aus der Ruhelage 51 in Hubrichtung 63 angehoben, wie in Fig. 3 gezeigt ist. In der Ruhelage 51 gemäß Fig. 5 hat die Anlagefläche 57 des Koppelelementes 22 einen Abstand K1 von der Hebelachse 33 des insbesondere als Zwischenhebel 37 ausgebildeten Übertragungselementes 23. Die am freien Ende 45 des Hebelarms 35 des Zwischenhebels 37 angreifende Zugstange 24 ist geradlinig ausgebildet und weist eine Längsmittelachse 64 auf, die mit einem Abstand a zur Nockenachse 36 liegt. Die Zugfeder 46 ist mit einem Ende 56 gehäusefest fixiert und greift mit dem anderen Ende 55 am zweiten Hebelarm 35 des Zwischenhebels 37 an. Zweckmäßig ist das andere Ende 55 der Zugfeder 46 an einem gekröpften Ende 54 der Zugstange 24 eingehängt.

In der Ruhelage 51 gemäß Darstellung in Fig. 5 ergibt sich eine wirksame Länge eines ersten Hebelarms K1 zwischen dem Koppelelement 22 an dem Zwischenhebel 37 und der Hebelachse 33 des Zwischenhebels 37. Der Hebelarm K1 ist bestimmt durch den Abstand der Anlagefläche 57 des Koppelelementes 22 am ersten Hebelarm 34 des Zwischenhebels 37 zur Hebelachse 33. Ferner ist eine wirksame Länge eines zweiten Hebelarms L zwischen der Anlenkstelle der Zugstange 24 an dem Zwischenhebel 37 und der Hebelachse 33 des Zwischenhebels 37 gegeben. Die Zugstange 24 stellt eine mechanische Getriebeverbindung zwischen dem Zwischenhebel 37 und dem Schaltnocken 30 her.

Die zwischen der Anstiegsflanke 38 und der Auslaufflanke 39 gebildete Anlagekante 58 des Schaltnockens 30 liegt in der Ruhelage 51 nach Fig. 5 mit einem Abstand S1 zur Betätigungsachse 42 der Schaltzunge 41.

Bewirkt der Benutzer durch Niederdrücken des ersten Betätigungselementes 12 und des zweiten Betätigungselementes 17 einen Hub des Koppelelementes 22 in Hubrichtung 63 (Fig. 3), so verlagert sich das Koppelelement 22 relativ zu dem ortsfest im Gehäuse 3 angeordneten als Zwischenhebel 37 ausgebildeten Übertragungselement 23 und dem Schaltnocken 30. Der in Hubrichtung 63 bewirkte Hub des Koppelelementes 22 verschwenkt den Zwischenhebel 37 in Drehrichtung 60, wie in Fig. 3 dargestellt ist. Dabei ändert sich der Ort der Anlagefläche 57 des Koppelelementes 22 am ersten Hebelarm 34 des Zwischenhebels 37; der Abstand der Anlagefläche 57 von der Hebelachse 33 wächst bis zu einer Länge eines wirksamen Hebelarms K2 an, wie er in Fig. 3, 6 dargestellt ist. Die Länge des Hebelarms K2 in der Endlage 53 nach Fig. 3 ist größer als die Länge des Hebelarms K1 in der Ruhelage nach Fig. 5.

Die Drehung des Zwischenhebels 37 in Drehrichtung 60 führt zu einem Schwenken des freien Endes 45 des zweiten Hebelarms 35 in Richtung 59 um die Hebelachse 33. Dabei wird die Zugfeder 46 gelängt und zugleich über die Zugstange 24 der Schaltnocken 30 in Drehrichtung 61 um die Nockenachse 36 gedreht. Die Schaltzunge 41 gleitet über die Anlagekante 58 auf die Auslaufflanke 39 auf, der als Kreisbogenabschnitt 49 ausgebildet ist. Der Abstand zwischen der Auflage der Schaltzunge 41 auf der Auslaufflanke 39 des Schaltnockens 30 und der Betätigungsachse 42 der Schaltzunge 41 ist auf den Abstand S2 angewachsen. Aufgrund der Ausbildung als Kreisbogenabschnitt 49 ist der Schaltnocken 30 über die Schaltstellung des Schaltelementes 40 hinaus drehbar.

In der Endlage 53 nach den Fig. 3 und 6 liegt die Längsmittelachse 64 der Zugstange 24 mit einem Abstand b zur Nockenachse 36. Der Abstand b in der Endlage 53 nach Fig. 6 ist größer, insbesondere mehrfach größer als der Abstand a in Ruhelage 51 der Vorrichtung 50 gemäß Fig. 5.

Die vom Benutzer z. B. am Betätigungselement 12 aufzubringende Betätigungskraft 70 setzt sich zusammen aus der aufzubringenden Verstellkraft 71 der Vorrichtung 50 und der Federkraft 72 der Rückstellfeder 52 am Betätigungselement 12. Die zum Bewegen des Zwischenhebels 37 aufzubringende Verstellkraft 71 bildet somit zumindest einen Anteil der am Betätigungselement 12 im Handgriff 4 des Arbeitsgerätes 1 aufzubringenden Betätigungskraft 70.

In gleicher Weise setzt sich eine vom Benutzer am zweiten Betätigungselement 17 aufzubringende Betätigungskraft 70' aus der aufzubringenden Verstellkraft der Vorrichtung 50 und einer das Betätigungselement 17 rückstellenden Federkraft zusammen.

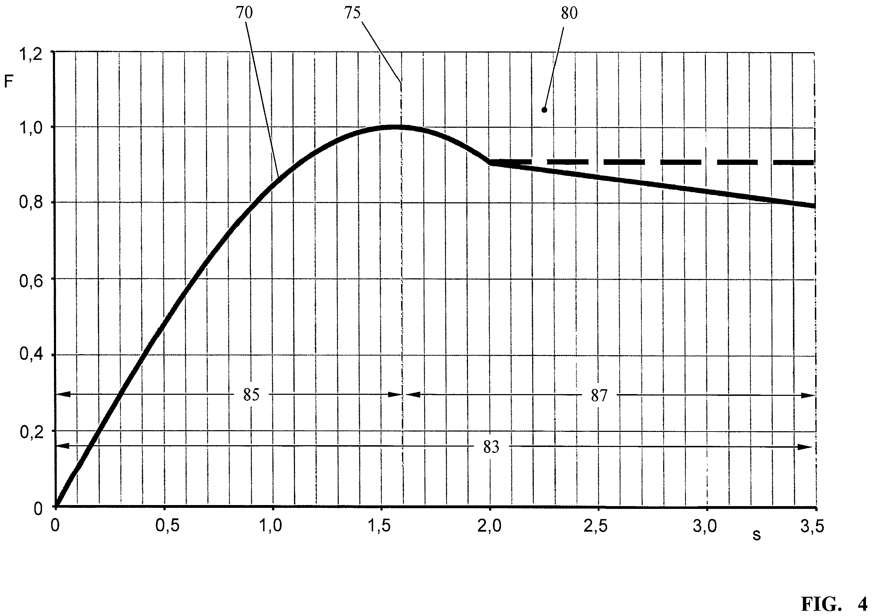

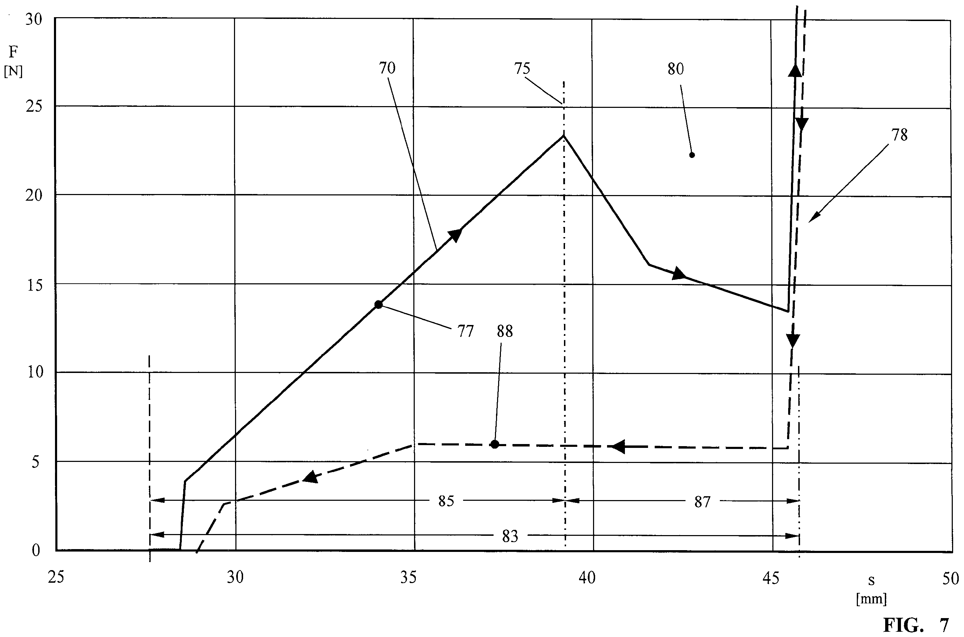

Der Kraftverlauf z. B. der Betätigungskraft 70 am Betätigungselement 12 ist beispielhaft in Fig. 4 oder Fig. 7 wiedergegeben. Der Drehweg 62 des Betätigungselementes 12 um die Hebelachse 65 ist in Fig. 2 dargestellt.

Durch Niederdrücken des Betätigungselementes 12 führt dieses - im Ausführungsbeispiel - einen Schwenkweg um die Hebelachse 65 in Pfeilrichtung 66 aus. Dabei durchläuft das Betätigungselement 12 vorzugsweise eine Schwenkbewegung um die Hebelachse 65 über den Drehweg 62. In einem ersten Drehwinkelbereich 68, der einem ersten Wegabschnitt 85 des Verstellweges 83 entspricht, steigt die auf das Betätigungselement 12 aufzubringende Betätigungskraft 70 steil an (Figuren 4, 7). Dies ist dadurch bedingt, dass aus der Ruhelage 51 in die Endlage 53 zunächst jeweils kleine Längen der Hebelarme in der Vorrichtung 50 wirksam sind. So ist die Länge des Hebelarms K1 der Anlagefläche 57 des Koppelelementes 22 von der Hebelachse 33 klein. Entsprechend ist der Abstand a der Längsmittelachse 64 der Zugstange 24 zur Nockenachse 36 klein. Auch der Abstand S1 zwischen der Anlagekante 58 des Schaltnockens 30 an der Schaltzunge 41 ist zunächst klein.

Die Längen der wirksamen Hebelarme K1, K2, S1, S2, L, a, b der Vorrichtung 50 wachsen mit zunehmendem Hub des Koppelelementes 22 und Drehung des Übertragungselementes 23 in Drehrichtung 60 an, so dass - in einem zweiten Drehwinkelbereich 69, der einem zweiten Wegabschnitt 87 des Betätigungselementes 12 entspricht (vgl. Figuren 4, 7) - die Betätigungskraft 70 nach einem Maximum 75 abnimmt. Die vom Benutzer am Betätigungselement 12 aufzubringende Haltekraft nach dem Einschalten des Antriebsmotors 20 wird geringer. Wie die Figuren 4, 7 zeigen, ist im Bereich des zweiten Drehwinkelbereichs 69 bzw. des zweiten Wegabschnitts 87 die Haltekraft bevorzugt etwa gleich (strichlierter Kurvenabschnitt in Fig. 4) oder abnehmend (durchgezogener Kurvenabschnitt in Fig. 4 und 7).

Der Verstellweg 83 des Übertragungselementes 23 ist in den Figuren 4 und 7 dargestellt. Der Verstellweg 83 umfasst den ersten, an die Ruhelage 51 gemäß Fig. 5 anschließenden ersten Wegabschnitt 85 und einen an den ersten Wegabschnitt 85 anschließenden zweiten Wegabschnitt 87. Der zweite Wegabschnitt 87 umfasst den Betriebsbereich 80. Die über das Betätigungselement 12 auf das Übertragungselement 23 aufzubringende Verstellkraft 71 steigt auf dem ersten Wegabschnitt 85 des Verstellweges 83 an, um nach Erreichen eines Maximums 75 auf dem zweiten Wegabschnitt 87 abzunehmen und/oder gleich zu bleiben.

Die auf das Betätigungselement 12 aufzubringende Betätigungskraft 70 setzt sich zusammen aus der Federkraft 72 der Rückstellfeder 52 und der Verstellkraft 71 für die Vorrichtung 50 zum Betätigen des elektrischen Schaltelementes 40. Aufgrund der Auslegung der wirksamen Längen der Hebelarme K1, K2, S1, S2, a, b ergibt sich in besonderer Weise eine Summe aus Verstellkraft 71 und Federkraft 72, die über einen Teilabschnitt 89 des Verstellweges 83 konstant ist. Dies ist insbesondere Fig. 4 zu entnehmen.

Die Auslegung der wirksamen Hebellängen K1, K2, S1, S2, L, a, b ist dabei so getroffen, dass im Maximum 75 der Verstellkraft das elektrische Schaltelement 40 durchschaltet, um den elektrischen Antriebsmotor 20 in Betrieb zu nehmen.

Wie Fig. 7 zeigt, verläuft die durchgezogen dargestellte Einschaltkurve 77 anders als die Ausschaltkurve 88, die strichliert dargestellt ist. Zwischen der Einschaltkurve 77 und der Ausschaltkurve 88 besteht eine Hysterese. Während die Einschaltkurve 77 der Betätigungskraft 70 über den Weg s bis zu einem Maximum 75 steil ansteigt, verläuft die Ausschaltkurve 88 im gleichen Wegbereich flach. Die am Betätigungsglied 12 wirkende Kraft F ist beim Ausschalten des Arbeitsgerätes, also beim Rückführen des Betätigungsgliedes 12 aus der Einschaltstellung nach Fig. 6 in die Ausgangsstellung nach Fig. 5, kleiner als die Einschaltkraft, insbesondere mehrfach kleiner als die Einschaltkraft.

Nach dem Durchfahren eines Betätigungsweges s von etwa 46 mm steigt die Betätigungskraft F steil an, wie Fig. 7 zeigt. Dieser steile Anstieg des Kurvenastes 78 ist dadurch bewirkt, dass das Betätigungselement 12 "auf Block" geht, also an einen Anschlag anschlägt. Dies kann ein gehäusefester Anschlag sein, an dem das Betätigungselement 12 anschlägt oder auch ein im Drehweg des Schaltnockens 30 oder ein im Stellweg des Übertragungselementes 23 vorgesehener Anschlag sein.

Es kann vorteilhaft sein, am Schaltnocken 30 eine weitere Nockenbahn 90 vorzusehen, über die eine nicht dargestellte weitere Schaltzunge eines weiteren elektrischen Schaltelementes betätigt werden kann. Dieses weitere elektrische Schaltelement kann z. B. als Bremsschalter des elektrischen Antriebsmotors genutzt werden.

## Patentansprüche

1. Handgeführtes Arbeitsgerät mit einer Vorrichtung (50) zur Inbetriebnahme eines elektrischen Antriebsmotors (20) über zumindest ein Betätigungselement (12), wobei das Betätigungselement (12) in einem Handgriff (4) des Arbeitsgerätes (1) angeordnet und gegen eine Betätigungskraft (70) in eine Betriebsstellung zu verlagern ist, und mit einem Übertragungselement (23), das mit dem Betätigungselement (12) stellungsabhängig gekoppelt ist und abhängig von der Lage des Betätigungselementes (12) aus einer Ruhelage (51) in einen Betriebsbereich (80) verstellbar ist, wobei das Übertragungselement (23) ein elektrisches Schaltelement (40) betätigt, um den elektrischen Antriebsmotor (20) in Betrieb zu nehmen, und das Übertragungselement (23) auf einem Verstellweg (83) aus der Ruhelage (51) in eine Endlage (53) mit einer Verstellkraft (71) zu verstellen ist, wobei die zum Bewegen des Übertragungselementes (23) aufzubringende Verstellkraft (71) zumindest einen Anteil der Betätigungskraft (70) bildet, **dadurch gekennzeichnet,**
- **dass** der Verstellweg (83) des Übertragungselementes (23) einen ersten, an die Ruhelage (51) anschließenden Wegabschnitt (85) aufweist,
- **dass** der Verstellweg (83) des Übertragungselementes (23) einen an den ersten Wegabschnitt (85) anschließenden zweiten Wegabschnitt (87) aufweist,
- **dass** der zweite Wegabschnitt (87) den Betriebsbereich (80) umfasst,
- und **dass** die auf das Übertragungselement (23) aufzubringende Verstellkraft (71) auf dem ersten Wegabschnitt (85) des Verstellweges (83) ansteigt und nach Erreichen eines Maximums (75) auf dem zweiten Wegabschnitt (87) des Verstellweges (83) abnimmt.

2. Arbeitsgerät nach Anspruch 1,
**dadurch gekennzeichnet, dass** das Betätigungselement (12) gegen eine Federkraft (72) zu verstellen ist und sich die Federkraft (72) und die Verstellkraft (71) zu der Betätigungskraft (70) addieren.

3. Arbeitsgerät nach Anspruch 2,
**dadurch gekennzeichnet, dass** die Summe aus der Verstellkraft (71) und der Federkraft (72) über einen Teilabschnitt (89) des Verstellweges (83) gleich ist.

4. Arbeitsgerät nach Anspruch 1,
**dadurch gekennzeichnet, dass** das elektrische Schaltelement (40) in einem Bereich des Maximums (70) der Verstellkraft (71) den elektrischen Antriebsmotor (20) einschaltet.

5. Arbeitsgerät nach Anspruch 1,
**dadurch gekennzeichnet, dass** das Übertragungselement (23) als ein um eine Hebelachse (33) drehbarer Zwischenhebel (37) ausgebildet ist.

6. Arbeitsgerät nach Anspruch 5,
**dadurch gekennzeichnet, dass** an einem ersten Hebelarm (34) des Zwischenhebels (37) ein mit dem Betätigungselement (12) verstellbares Koppelelement (22) anliegt.

7. Arbeitsgerät nach Anspruch 6,
**dadurch gekennzeichnet, dass** sich eine wirksame Hebellänge (K1, K2) zwischen dem Koppelelement (22) und der Hebelachse (33) des Zwischenhebels (37) in Abhängigkeit des Drehwinkels des Zwischenhebels (37) ändert.

8. Arbeitsgerät nach einem der Ansprüche 1 bis 7,
**dadurch gekennzeichnet, dass** das elektrische Schaltelement (40) von einem um eine Nockenachse (36) drehenden Schaltnocken (30) zu schalten ist.

9. Arbeitsgerät nach Anspruch 5 und 8,
**dadurch gekennzeichnet, dass** ein zweiter Hebelarm (35) des Zwischenhebels (37) über eine Zugstange (24) mit dem Schaltnocken (30) verbunden ist.

10. Arbeitsgerät nach Anspruch 8,
**dadurch gekennzeichnet, dass** der Schaltnocken (30) über die Schaltstellung des elektrischen Schaltelements (40) hinaus drehbar ist.

11. Arbeitsgerät nach Anspruch 8,
**dadurch gekennzeichnet, dass** das elektrische Schaltelement (40) als Betriebsschalter mit einer Schaltzunge (41) ausgebildet ist, und der Schaltnocken (30) eine Anstiegsflanke (38) aufweist, die in einer Ruhelage (51) des Schaltnockens (30) mit einem Abstand (48) zu der Schaltzunge (41) des Schaltelementes (40) liegt.

12. Arbeitsgerät nach Anspruch 11,
**dadurch gekennzeichnet, dass** der Schaltnocken (30) eine an die Anstiegsflanke (38) anschließende Auslaufflanke (39) aufweist, die als Kreisbogenabschnitt (49) um die Nockenachse (36) ausgebildet ist.

13. Arbeitsgerät nach Anspruch 8,
**dadurch gekennzeichnet, dass** der Schaltnocken (30) eine weitere Nockenbahn (90) für ein weiteres elektrisches Schaltelement als Bremsschalter aufweist.

14. Arbeitsgerät nach Anspruch 8,
**dadurch gekennzeichnet, dass** das Schaltelement (40) eine Schaltzunge (41) aufweist und bei Drehung des Schaltnockens (30) der einen Schalthebel bildende Abstand (S1, S2) zwischen dem Schaltnocken (30) und einer Betätigungsachse (42) der Schaltzunge (40) anwächst.

15. Arbeitsgerät nach einem der Ansprüche 1 bis 14,
**dadurch gekennzeichnet, dass** in der Ruhestellung (51) des Übertragungselementes (23) die wirksame Länge des Hebelarms (K1) zwischen dem Koppelelement (22) und der Hebelachse (33) des Übertragungselementes (23) kleiner ist als die wirksame Länge des Hebelarms (L) zwischen der Anlenkstelle der Zugstange des Übertragungselementes (23) an dem Schaltnocken (30) und der Hebelachse (33) des Übertragungselementes (23).

## Claims

1. Hand-guided working implement with a device for starting an electric drive motor (20) by way of at least one actuating element (12), wherein the actuating element (12) is located in a handle (4) of the working implement (1) and has to be moved into an operating position against an actuating force (70), and with a transmission element (23), which is coupled to the actuating element (12) in a position-dependent manner and can be moved from a position of rest (51) into an operating range (80) as a function of the position of the actuating element (12), wherein the transmission element (23) actuates an electric switching element (40) in order to start the electric drive motor (20) and wherein the transmission element (23) is to be adjusted along an adjusting path (83) from the position of rest (51) to an end position (53) with an adjusting force (71), wherein the adjusting force (71) to be applied for moving the transmission element (23) forms at least a part of the actuating force (70),
**characterised in that**
- the adjusting path (83) of the transmission element (23) has a first path section (85) adjoining the position of rest (51),
- the adjusting path (83) of the transmission element (23) has a second path section (87) adjoining the first path section (85),
- the second path section (87) comprises the operating range (80),
- and the adjusting force (71) to be applied to the transmission element (23) increases on the first path section (85) of the adjusting path (83) and, on reaching a maximum (75), decreases on the second path section (87) of the adjusting path (83).

2. Working implement according to claim 1,
**characterised in that** the actuating element (12) is to be adjusted against a spring force (72) and the spring force (72) and the adjusting force (71) add up to form the actuating force (70).

3. Working implement according to claim 2,
**characterised in that** the sum of the adjusting force (71) and the spring force (72) is equal along a subsection (89) of the adjusting path (83).

4. Working implement according to claim 1,
**characterised in that** the electric switching element (40) switches on the electric drive motor (20) in a range of the maximum (70) of the adjusting force (71).

5. Working implement according to claim 1,
**characterised in that** the transmission element (23) is designed as an intermediate lever (37) rotatable about a lever axis (33).

6. Working implement according to claim 5,
**characterised in that** a coupling element (22) adjustable with the actuating element (12) bears against a first lever arm (34) of the intermediate lever (37).

7. Working implement according to claim 6,
**characterised in that** an effective lever length (K1, K2) changes between the coupling element (22) and the lever axis (33) of the intermediate lever (37) as a function of the rotational angle of the intermediate lever (37).

8. Working implement according to any of claims 1 to 7,
**characterised in that** the electric switching element (40) is to be switched by a switching cam (30) rotating about a cam axis (36).

9. Working implement according to claims 5 and 8,
**characterised in that** a second lever arm (35) of the intermediate lever (37) is joined to the switching cam (30) by way of a tie rod (24).

10. Working implement according to claim 8,
**characterised in that** the switching cam (30) is rotatable beyond the switching position of the electric switching element (40).

11. Working implement according to claim 8,
**characterised in that** the electric switching element (40) is designed as an operating switch with a switching tongue (41), and **in that** the switching cam (30) has a leading edge (18), which lies at a distance from the switching tongue (41) of the switching element (40) in a position of rest (51) of the switching cam (30).

12. Working implement according to claim 11,
**characterised in that** the switching cam (30) has a trailing edge (39), which adjoins the leading edge (18) and is designed as a circular arc section (49) around the cam axis (36).

13. Working implement according to claim 8,
**characterised in that** the switching cam (30) has a further cam track (90) for a further electric switching element acting as a brake switch.

14. Working implement according to claim 8,
**characterised in that** the switching element (40) has a switching tongue (41), and **in that** the distance (S1, S2) - forming a switching lever - between the switching cam (30) and an actuating axis (42) of the switching tongue (41) increases as the switching cam (30) rotates.

15. Working implement according to any of claims 1 to 14,
**characterised in that** in the position of rest (51) of the transmission element (23) the effective length of the lever arm (K1) between the coupling element (22) and the lever axis (33) of the transmission element (23) is less than the effective length of the lever arm (L) between the articulation point of the tie rod of the transmission element (23) on the switching cam (30) and the lever axis (33) of the transmission element (23).

## Revendications

1. Appareil de travail à main avec un dispositif (50) pour la mise en service d'un moteur d'entraînement électrique (20) par l'intermédiaire d'au moins un élément d'actionnement (12), dans lequel l'élément d'actionnement (12) est disposé dans une poignée (4) de l'appareil de travail (1) et doit être déplacé à l'encontre d'une force d'actionnement (70) dans une position de fonctionnement, et avec un élément de transmission (23), qui est couplé en fonction de la position à l'élément d'actionnement (12) et est ajustable, en fonction de la position de l'élément d'actionnement (12), d'une position de repos (51) à une zone de fonctionnement (80), dans lequel l'élément de transmission (23) actionne un élément de commutation (40) électrique pour mettre en service le moteur d'entraînement électrique (20) et l'élément de transmission (23) doit être ajusté avec une force d'ajustement (71) sur un trajet d'ajustement (83) de la position de repos (51) à une position finale (53), dans lequel la force d'ajustement (71) à appliquer pour déplacer l'élément de transmission (23) forme au moins une fraction de la force d'actionnement (70),
**caractérisé en ce**
- **que** le trajet d'ajustement (83) de l'élément de transmission (23) présente une première partie de trajet (85) se joignant à la position de repos (51),
- **que** le trajet d'ajustement (83) de l'élément de transmission (23) présente une deuxième partie de trajet (87) se joignant à la première partie de trajet (85),
- **que** la deuxième partie de trajet (87) comprend la zone de fonctionnement (80),
- et **que** la force d'ajustement (71) à appliquer sur l'élément de transmission (23) augmente sur la première partie de trajet (85) du trajet d'ajustement (83) et diminue une fois un maximum (75) atteint sur la deuxième partie de trajet (87) du trajet d'ajustement (83).

2. Appareil de travail selon la revendication 1,
**caractérisé en ce que** l'élément d'actionnement (12) doit être ajusté à l'encontre d'une force de ressort (72) et la force de ressort (72) et la force d'ajustement (71) s'additionnent pour former la force d'actionnement (70).

3. Appareil de travail selon la revendication 2,
**caractérisé en ce que** la somme composée de la force d'ajustement (71) et de la force de ressort (72) est constante sur une partie partielle (89) du trajet d'ajustement (83).

4. Appareil de travail selon la revendication 1,
**caractérisé en ce que** l'élément de commutation (40) électrique active le moteur d'entraînement électrique (20) dans une plage du maximum (70) de la force d'ajustement (71).

5. Appareil de travail selon la revendication 1,
**caractérisé en ce que** l'élément de transmission (23) est réalisé en tant que levier intermédiaire (37) pouvant tourner autour d'un axe de levier (33).

6. Appareil de travail selon la revendication 5,
**caractérisé en ce qu'**un élément de couplage (22) ajustable avec l'élément d'actionnement (12) repose sur un premier bras de levier (34) du levier intermédiaire (37).

7. Appareil de travail selon la revendication 6,
**caractérisé en ce qu'**une longueur de levier (K1, K2) active entre l'élément de couplage (22) et l'axe de levier (33) du levier intermédiaire (37) varie en fonction de l'angle de rotation du levier intermédiaire (37).

8. Appareil de travail selon l'une des revendications 1 à 7,
**caractérisé en ce que** l'élément de commutation (40) électrique doit être commuté par une came de commutation (30) tournant autour d'un axe de came (36).

9. Appareil de travail selon la revendication 5 et 8,
**caractérisé en ce qu'**un deuxième bras de levier (35) du levier intermédiaire (37) est relié à la came de commutation (30) par l'intermédiaire d'une tige de traction (24).

10. Appareil de travail selon la revendication 8,
**caractérisé en ce que** la came de commutation (30) peut tourner au-delà de la position de commutation de l'élément de commutation (40) électrique.

11. Appareil de travail selon la revendication 8,
**caractérisé en ce que** l'élément de commutation (40) électrique est réalisé en tant que commutateur de fonctionnement avec une languette de commutation (41), et la came de commutation (30) présente un flanc ascendant (38) qui se trouve dans une position de repos (51) de la came de commutation (30), à une distance (48) de la languette de commutation (41) de l'élément de commutation (40).

12. Appareil de travail selon la revendication 11,
**caractérisé en ce que** la came de commutation (30) présente un flanc divergeant (39) se joignant au flanc ascendant (38) qui est réalisé en tant que segment d'arc de cercle (49) autour de l'axe de came (36).

13. Appareil de travail selon la revendication 8,
**caractérisé en ce que** la came de commutation (30) présente une autre voie de came (90) pour un autre élément de commutation électrique en tant que commutateur de freinage.

14. Appareil de travail selon la revendication 8,
**caractérisé en ce que** l'élément de commutation (40) présente une languette de commutation (41) et la distance (S1, S2) formant un levier de commutation croît entre la came de commutation (30) et un axe d'actionnement (42) de la languette de commutation (40) lors de la rotation de la came de commutation (30).

15. Appareil de travail selon l'une des revendications 1 à 14,
**caractérisé en ce que** dans la position de repos (51) de l'élément de transmission (23), la longueur active du bras de levier (K1) entre l'élément de couplage (22) et l'axe de levier (33) de l'élément de transmission (23) est inférieure à la longueur active du bras de levier (L) entre le point d'articulation de la tige de traction de l'élément de transmission (23) sur la came de commande (30) et l'axe de levier (33) de l'élément de transmission (23).
